# EUROPEAN PATENT SPECIFICATION

(11) **EP 4 051 970 B1**
(45) Date of publication and mention of the grant of the patent: **12.03.2025**
(21) Application number: 20800746.8
(22) Date of filing: 29.10.2020
(51) Int. Cl.: F24S 25/613, H02S 20/23

(54) **ROOF HOOK**
DACHHAKEN
CROCHET DE TOIT

(30) Priority: 31.10.2019 NL 2024136
(43) Date of publication of application: 07.09.2022
(73) Proprietor: Esdec B.V., 7418 EE Deventer (NL)
(72) Inventor: DE GRAAF, Jan-Floris, 7418 EE Deventer (NL); WAGTER, Jeroen Johannes Bernardus, 7418 EE Deventer (NL)
(74) Representative: Patentwerk B.V.
(86) International application number: PCT/NL2020/050671
(87) International publication number: WO 2021/086185

(56) References cited:
- EP-A1- 2 715 011
- EP-A2- 1 856 323
- DE-B3- 102004 049 595
- DE-U1- 20 304 099
- DE-U1- 202004 008 499
- DE-U1- 202011 109 417
- NL-C2- 2 011 649

## Description

The invention relates to a roof hook for fixing solar panels to a roof. The invention also relates to a method for fixing solar panels to a tiled roof.

Roof hooks are commonly used for attaching solar panels to a roof. A conventional type of roof hook is screwed to a tile batten and connected to a mounting rail for fixing the solar panel to the roof. A drawback of such system is that mounting of a solar panel on the roof is a relatively time-consuming due to the relatively high number of mechanical fixing elements required. A further drawback is that the tile batten, or other roof element whereto the roof hook is fixated, is weakened due to the mechanical fixation via the screw connection. A known solution which provides a faster mounting method without weakening the roof construction is the use of a roof hook which makes use of a hook-shaped member which is adapted for co-action with a tile batten arranged on the roof. Such roof hook according to the prior art is for example described in EP 1856323. A drawback of this known roof hook, and of further known roof hooks, is that they are typically relatively massive wherefore it can still be relatively time consuming to install the roof hooks on a roof. Furthermore, DE 202011109417 U1 for instance discloses a roof hook for coupling to at least one mounting device, having a positive-locking frame element for enclosing at least one roof tile on the top and/or bottom in sections in a first direction (y), the positive-locking frame element comprising an upper section and a lower section, and the upper section having at least two contact regions spaced apart from one another, for bringing into contact with the roof tile, wherein the upper section comprises a coupling region, which is spaced apart in the first direction (y) from the contact regions and connects the contact regions, for receiving the mounting device.

It is therefore a goal of the invention to provide a further improved roof hook configured for (nondestructive) co-action with a tile batten.

The invention provides thereto a roof hook according to claim 1 for fixing solar panels to a roof. comprising:
- at least one substantially elongated base element, and
- at least one hook member, wherein the base element and at least one hook member are mutually (displaceable) connected and configured for co-action with a tile batten arranged on the roof, and wherein the base element and at least one hook member are mutually displaceable, at least between:
   ∘ a position of use wherein the base element and at least one hook member define a hook structure such that at least one hook member can be hooked behind a tile batten arranged on the roof, and
   ∘ an initial position wherein the roof hook is more compact than in the position of use, and
wherein the roof hook comprises at least two hook members, wherein each hook member is displaceable with respect to the base element such that the mutual distance between said hook members can be varied.

The roof hook according to the present invention experiences the known advantages that the roof hook can be positioned between tiles on a tiled roof without additional mechanical fixing means being necessary here, thereby realizing a strong and reliable coupling between the roof and the roof hook. Hence, mounting can be done relatively quickly and simply wherein the tile batten is not unnecessarily weakened. A further benefit of the roof hook according to the present invention is that mounting of the roof hook can be further optimized. Due to the base element and at least one hook member being mutually displaceable between at least a position of use wherein the base element and at least one hook member define a hook structure such that at least one hook member can be hooked behind part of the roof, in particular a tile batten arranged on the roof, and an initial position wherein the roof hook is more compact than in the position of use, the roof hook can be easier installed onto a roof. With more compact, it is meant that at least one dimension of the roof hook is reduced, preferably at least in vertical direction. For example, but not limited to, the (effective) height of the roof hook. However, this may also be the length of the roof hook, and/or the volume. Installing of a roof hook onto a roof is typically done via providing a receiving space for the roof hook to be received in via sliding a tile upwards such that the tile is positioned under the tile above it. The hook structure of the roof hook can then be hooked behind a tile batten of the roof underneath the displaced tile. Once the roof hook is in a proper position, the displaced tile is to be put back in its regular position. Since the hook structure of the roof hook is configured to be hooked behind the tile batten the volume defined the hook structure is relatively large wherefore also a relatively large receiving space between the tiles is required in order to be able to insert the roof hook into position. The required receiving space can be substantially reduced if the roof hook can be inserted in an initial position wherein the roof hook is more compact than in the position of use. Hence, after the roof hook is inserted, the configuration of the roof hook can be adapted such that the base element and at least one hook member will be in the position of use. This can be done via mutual displacement of the base element and at least one hook member. When it is referred to mutual displacement of the base element and at least one hook member, it is possible that the base element is displaced with respect to the hook member and/or vice versa. The compact character of the roof hook when the base element and at least one hook member are in the initial position, has besides the easier mounting also the benefit that the transport volume can be reduced. When the base element and at least one hook member are in the initial position, it can also be said that the roof hook, as such, is in the initial position. This also applies to the position of use. The initial position can also be referred to as mounting position and/or transport position. Typically, in the initial position, the (effective) height defined by the base element and at least one hook member is smaller than said (effective) height in the position of use. The height is defined substantially perpendicular to the longitudinal direction defined by the elongated part of the base element. That the height defined by the base element and the hook member(s) is increased again when the mutual position is displaced to the position of use would not cause difficulties, since generally this area of the location of use of the roof hook is sufficiently spacious. This is especially the area behind (in extension of) the roof tile of which tile batten the roof hook is to be hooked and the area underneath said tile.

When it is referred to a hook member, also a hook-shaped member can be meant. Further, at least one hook member can define a hook (structure) by itself and/or define a hook (structure) in combination with the base element. At least part of the base element in a roof hook according to the present invention is substantially elongated. The hook structure defines and/or encloses an accommodating space configured for accommodating at least part of the roof.

An advantage of the roof hook of the present invention is that the roof hook has a large adaptive capacity. A further benefit of the roof hook according to the present invention is that use and understanding of the roof hook is relatively simple. Initiating of the mutual displacing between said possible positions is self-explanatory. A specialist professional is not required for installing the roof hook onto a roof. Neither are specific tools necessary to initiate the mutual displacement. The roof hook will generally be applied for mounting solar panels on a tiled roof. It is however also possible to envisage arranging other objects, such as for instance a solar boiler, on the roof by means of the roof hook according to the invention.

It is in particular beneficial if the base element and at least one hook member are mutually pivotable between the initial position and the position of use. A pivotable movement is relatively simple and can already be ensured when only single side engagement between the base element and a hook member is applied. In fact, the base element and at least one hook member can be pivotably connected. However, it is also conceivable that the base element and at least one hook member are rotatably connected. In this embodiment, typically, at least one (or each) hook member is pivotable with respect to the base element and/or the base element is pivotable with respect to at least one hook member.

In a preferred embodiment, at least one hook member and the base element are mutually pivotable around an axis which is substantially parallel to the longitudinal direction of the base element. A benefit of this embodiment is that the compact (vertical) character of the roof hook in the initial position can be obtained in a relatively simple manner. It is for example conceivable that in the initial position, at least one hook member is positioned substantially parallel to the base element, preferably in a transverse direction. The roof hook is in such embodiment typically more wide, or broad, in the initial position than in the position of use. However, roof tiles are typically relatively wide compared to the roof hook, wherefore the difficulty of mounting is providing sufficient vertical space and the provision of sufficient horizontal space. Roof tiles may for example have a width between 20 and 40 centimeters, where the width of a base element of a roof hook may for example vary between 2 and 5 centimeters. However, this measures are exemplary and not limitative.

It is also conceivable that at least one hook member and the base element are mutually pivotable around an axis which is substantially perpendicular to the longitudinal direction of the base element. Said axis can for example be located at or near a distal end of the elongated part of the base element. In this way, a relatively simple and strong configuration of the roof hook can be obtained.

It is beneficial if the base element and at least one hook member are connected via at least one hinge. Hence, a pivotable connection between the base element and at least hook member can be obtained in a relatively simple manner. Non-limiting examples of possible hinges which can be used are a barrel hinge, a spring-loaded hinge and/or a pivot hinge. It is however, also conceivable that the base element and at least one hook member are connected via a ball and socket joint. A spring-loaded hinge may be in particular beneficial, if this embodiment may apply a force in order to secure the base element and at least one hook member in either the initial position and/or the position of use.

It is advantageous if the mutual position of at least one hook member and the base element can be locked, preferably at least in the position of use. It would also be beneficial if the mutual position of at least one hook member and the base element can be locked in the initial position and/or any further position. Mutual locking of the base element and at least one hook member in a (predetermined) position has as a benefit that the roof hook can be adapted to the preferences of the user in a relatively easy manner. The roof hook may for example comprise at least one locking element configured for locking the mutual position of at least one hook member and the base element in a predetermined position. If the hook member can at least be locking in the position of use, it can be prevented that undesired further mutual displacing of the base element and the hook member can occur. This is beneficial for the reliability of the roof hook and thus for the safety of the entire system wherein the roof hook is applied.

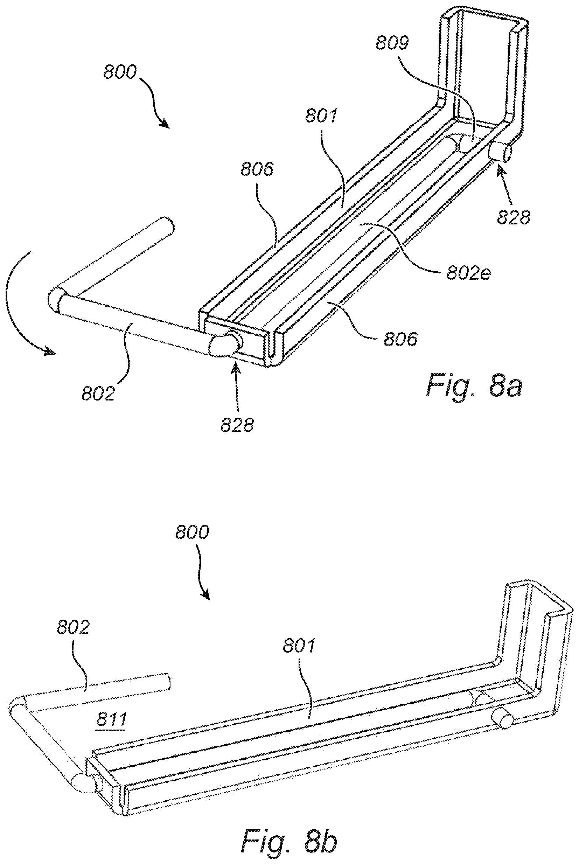

It is conceivable that at least one hook member comprises a rotatable shaft. It is for example possible that said shaft is rotatable in a longitudinal direction defined by the base element. Preferably the shaft is positioned in line with or parallel to the elongated part of the base element. The presence of a rotatable shaft may provide stability to the hook member, and thus also for the roof hook as such. It is possible that the rotatable shaft is configured for co-action with part of the base element. Rotation of the rotatable shaft may cause displacing of the hook member, in particular part of the hook member defining the hook structure. Rotation of the shaft may for example be actuated in a manual way. It is for example also conceivable that the hook member remains substantially stationary, seen from positional point of view, during mounting onto the roof, and that the base element is rotated with respect to the hook member, and in particular the rotatable shaft thereof. The rotatable shaft may possibly be connected to the base element such that twisting of the base element causes the hook member to act as a torsion spring. This may cause an effective fixation of the roof hook to part of the roof. During use of this embodiment of the roof hook, a distal end of the hook member may engage part of the roof such that a (temporary) fixation point is obtained. The rotatable shaft can for example be connected to the base element at two connection points spaced apart from another. A non-limiting example of this embodiment is shown in figures 8a and 8b.

A further possible embodiment of the roof hook comprises at least one operating element configured for (manual) activation of a mutual displacement between the base element and at least one hook member, preferably at least from the initial position to the position of use. The presence of at least one operating element may further improve the ease of use of the roof hook. The operating element may for example be connected to at least one hook member and/or to the base element. This may be either a direct or an indirect connection. It is also conceivable that the operating element forms integral part of the base element or hook member. It is further conceivable that the operating element would be remotely controllable.

The roof hook may be substantially symmetrical. This may further enhance the stability of the roof hook during use.

The roof hook comprises at least two hook members, wherein each hook member is (individually) displaceable with respect to the base element. It is for example possible that the hook members are positioned at a distance from another and/or that each hook member is pivotably connected to the base element. It would be beneficial if each hook member is at least displaceable, and in particular pivotable, with respect to the base element around an axis which is substantially parallel to the longitudinal direction of the base element. In such embodiment, the hook members can typically be pivoted in a transverse (or sideways) direction.

Each hook member is displaceable with respect to the base element such that the mutual distance between said hook members can be varied. Typically, each hook member is configured to be displaced in an outward direction. An outward direction means a direction facing away from the base element.

It is also conceivable that the base element and at least one hook member are mutually displaceable in a longitudinal direction, preferably such that the length of roof hook can be adapted. Such embodiment may further contribute to the adaptive character of the roof hook. It can be advantageous to be able to adapt the length of the roof hook for facilitating easier installation and/or for a more compact transport configuration. It is for example possible that at least one hook member is displaceable in the longitudinal direction of the base element. It is also conceivable that the base element and/or at least one hook member is substantially telescopic. It is also possible that the roof hook is a modular roof hook. It is furthermore possible that the base element and at least one hook member are mutually displaceable in both longitudinal and transverse direction.

It is possible that the volume enclosed by at least one hook member and the base element is smaller in the initial position than in the position of the use. This may further contribute to the ease of use of the roof hook. A smaller volume enclosed by the base member and at least one hook member may positively contribute to the compact design of the roof hook in the initial position. As outlined above, a smaller receiving space for receiving part of the roof hook during installation is enabled. In practice, this means that displacing of the roof tile which is to be lifted during installation is less labor intensive than for a more voluminous roof hook embodiment.

The roof hook comprises in a preferred embodiment at least one actuator for initiating mutual displacement between the base element and at least one hook member. The use of at least one actuator may be beneficial since it can further enhance the ease of use of the roof hook. The actuator can contribute to providing a controlled mutual displacement between the base element and at least one hook member. Further, manual contact of at least one hook member and or the base element by the user may be omitted. The actuator may also enable that said mutual displacement is initiated once the roof hook is already substantially positioned upon the roof. The actuator may enable that the mutual position is shifted from the initial position to the position of use during installation of the roof hook (instead of prior to installation). Preferably, the actuator is connected to the base element and/or at least one hook member. If an operating element is applied, the actuator may for example be controlled via the operating element. This may further contribute to remote initiation and/or remote control of the mutual displacement between the base element and at least one hook member, and thus to the ease of use.

Possibly, the base element and at least one hook member are connected via at least one gear, wherein the roof hook further comprises at least one gear rack configured for initiating mutual displacement between the hook member and the base element. Basically, the gear rack may act as actuator for initiating the mutual displacement between the base element and at least one hook member. In this embodiment, said mutual displacement can be initiated via a relatively simple but reliable manner. It is beneficial if the gear rack can be manually controlled, for example via at least one operating element.

It is furthermore conceivable that the base element and at least one hook member are mutually connected via at least two parallel positioned pivotable arms, such that at least part of the hook member stays substantially parallel to at least part of the base element during mutual displacement. Typically, at least one hook member is connected to the base element via at least two hinges positioned in series such that at least part of the hook member stays substantially parallel to at least part of the base element during mutual displacement. When it is referred to a hinge, also a pivotable joint can be meant. A benefit of this embodiment is that the effective height, or vertical extend, of the roof hook in the position of use can be minimized. This enables easier positioning on the roof in case a limited space is available.

It would be beneficial if the base element comprises at least one coupling member configured for coupling with at least one further mounting element for mounting a solar panel to a roof. In this manner, further mounting parts of a solar roof mounting system can be mounted to the base element in a relatively simple manner. It is for example also conceivable that the coupling member is configured for (releasable) coupling with a top structure of a roof hook. Such top structure may for example be configured for realizing a snap connection between the roof hook and a further mounting element. The roof hook may for example be a modular roof hook. This may further improve the adaptive ability of the roof hook.

Preferably, the base element and/or at least one hook member comprises at least one reinforcement rib. Such reinforcement rib may for example form integrally part of the base element or hook member. Via this embodiment, the strength of the roof hook can be enhanced in a relatively simple manner. Further, such reinforcement rib could also be used for secondary purposes, for example as protection element. It is also conceivable that a reinforcement rib of the base element is configured for co-action with at least part of the hook member and/or that the a reinforcement rib of the hook member is configured for co-action with at least part of the base element.

In a possible embodiment, at least part of the base element is configured to enclose at least part of at least one hook member. Preferably, at least part of the base element is configured to enclose at least part of at least one hook member in both the initial position and in the position of use. In this way, the base element can fulfil a protective function. This may in particular be beneficial in case the hook member comprises movable parts.

Further, a part of the base element may define a boundary configured to restrict the mutual displacement between the base element and at least one hook member. In this case, it can be prevented that the mutual displacement can be such that an undesired mutual position can be obtained. If the base element and hook member are rotatably connected, the boundary may for example restrict the mutual rotation, for example up to 120 or 90 decrees. However, it is also conceivable that part of the hook member defines a boundary configured to restrict the mutual displacement between the base element and said hook member.

The roof hook may at least partially be made of metal. Non-limiting examples thereof are steel, stainless steel, aluminum and/or an alloy. It is also conceivable that the roof hook is at least partially made of a plastic material. A combination of one or more plastics and/or metals is also conceivable.

In a preferred embodiment, the roof hook comprises at least one visual indicator for indicating the state of the mutual position between the base element and at least one hook member. Such visual indicator can be used in order to determine if the displacement between the base element and at least one hook member was successful. The displacement may for example be classified as successful if one or each hook member and the base element are in the position of use. The visual indicator may for example be positioned at a distance from the hook structure as defined in the position of use. The base element may for example comprise such visual indicator. The visual indicator may for example be positioned at or near a distal end of the base element opposite where the base element is connected with at least one hook member. It is also conceivable that the hook member comprises a visual indicator. The visual indicator is preferably positioned such that a used can detect the visual indication when the roof hook is installed on the roof, in particular in the position of use.

The invention also relates to a method for applying a roof hook according to the present invention to a roof, the method comprising the steps of:
a) providing a roof hook according to any of the previous claims wherein the base element and at least one hook member are in the initial position;
b) displacing a secondary tile of the roof which is positioned above a part of the roof configured for co-acting with the roof hook, in particular tile batten behind which the roof hook is to be hooked, such that a receiving space for receiving at least part of the roof hook is created;
c) positioning at least part of the roof hook into the receiving space;
d) bringing the base element and at least one hook member into the position of use such that the base element and at least one hook member define a hook structure;
e) hooking at least one hook member behind part of the roof, in particular the tile batten arranged on the roof;
f) optionally, positioning of the roof hook onto the primary tile;
g) putting the secondary tile back in its initial position.

The method according to the present invention has similar benefits as outlined for the roof hook according to the present invention. Due to the relatively compact configuration of the roof hook in the initial position only a relatively small receiving space needs to be provided during step b). Hence, compared to when a roof hook according to the prior art is used, the required receiving space is substantially reduced. After the roof hook is inserted, the configuration of the roof hook is to be adapted such that the base element and at least one hook member are in the position of use (step d). This can be done via mutual displacement of the base element and at least one hook member. When the roof hook is in the position of use, the hook member can be hooked behind part of the roof, in particular the tile batten. Hence, said tile batten is received within the hook structure as defined by the base element and at least one hook member. During optional step f), the roof hook can be positioned into the dip of the primary tile. It is also conceivable that the roof hook is positioned upon a further predetermined part of the primary tile.

The method may further comprise the step of locking of the base element and at least one hook member into the position of use. If at least one visual indicator is applied, a step of verifying if the mutual displacement was successful may be present.

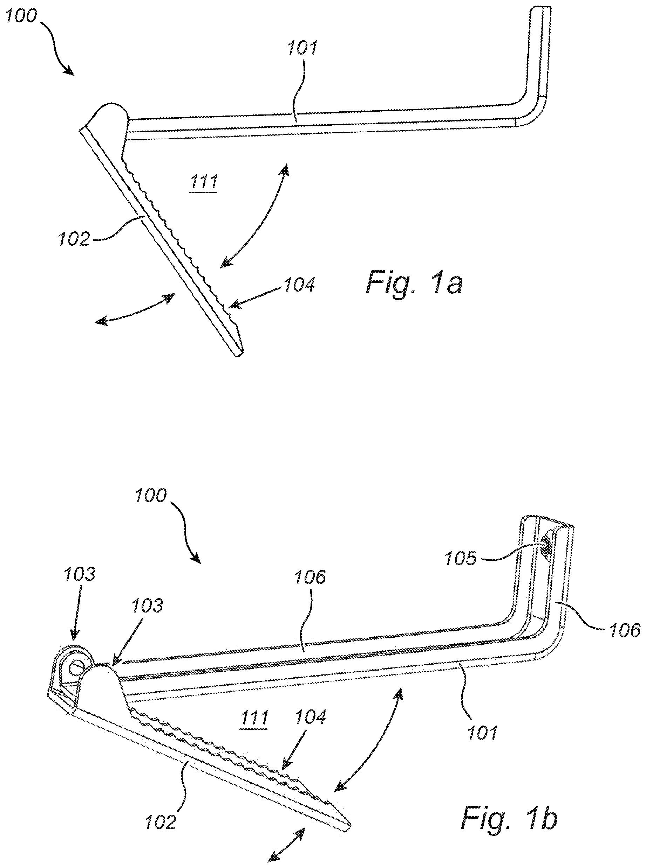

The invention will be further elucidated below on the basis of the non-limitative exemplary embodiments shown in the following figures. It should be noted that figures 1a-3c and figures 8a-10b show embodiments that help to understand the invention rather than being according to the claimed invention.

Figures 1a and 1b show a first possible embodiment of a roof hook 100 according to the present invention. Figure 1a shows a side view of the roof hook 100, where figure 1b shows a perspective view of said roof hook 100. The roof hook 100 is configured for fixing solar panels (not shown) to a roof (not shown). The roof hook 100 comprises a substantially elongated base element 101 and a hook member 102 which is configured for co-action with a part of a roof, in particular a tile batten arranged on the roof. The base element 101 and the hook member 102 are mutually displaceable between at least an initial position and a position of use. The arrows indicate possible directions of the mutual displacement between the base element 101 and hook member 102. The hook member 102 and base element 101 are mutually connected via hinges 103. The mutual displacement between the hook member 102 and the base element 101 is in particular defined by a pivotable movement. In the shown embodiment, the hook member 102 is substantially elongated and is provided with a sawtooth profile 104 adapted for relatively intensive co-action with a part of the roof, in particular a tile batten. The base element 101 comprises a coupling member 105 configured for coupling with at least one further mounting element for mounting a solar panel to a roof. The base element 101 is reinforced by making use of a profiled configuration. Thereto, the base element 101 comprises reinforcement ribs 106. The hook member 102 can be positioned substantially parallel to the elongated part of the base element 101. Said position can be used for example during transport of the roof hook 100 as the roof hook 100 is relatively compact in this configuration. It is also beneficial to use a position wherein the hook member 102 is substantially parallel to the base element 101 as it may enable easier positioning of the roof hook 100 onto the roof, as the (vertical) space required wherein the roof hook 100 is to be inserted between adjacent tiles can be reduced. The (average) mutual distance between the base element 101 and the hook member 102 is typically increased for the position of use.

In the position as shown in especially figure 1b, the base element 101 and the hook member 102 define a hook structure wherein the hook member 102 can be hooked behind part of the roof, in particular a tile batten arranged on the roof. Hence, the base element 101 and the hook member 102 define an accommodating space 111 wherein part of the roof, in particular a tile batten arranged on the roof can be received.

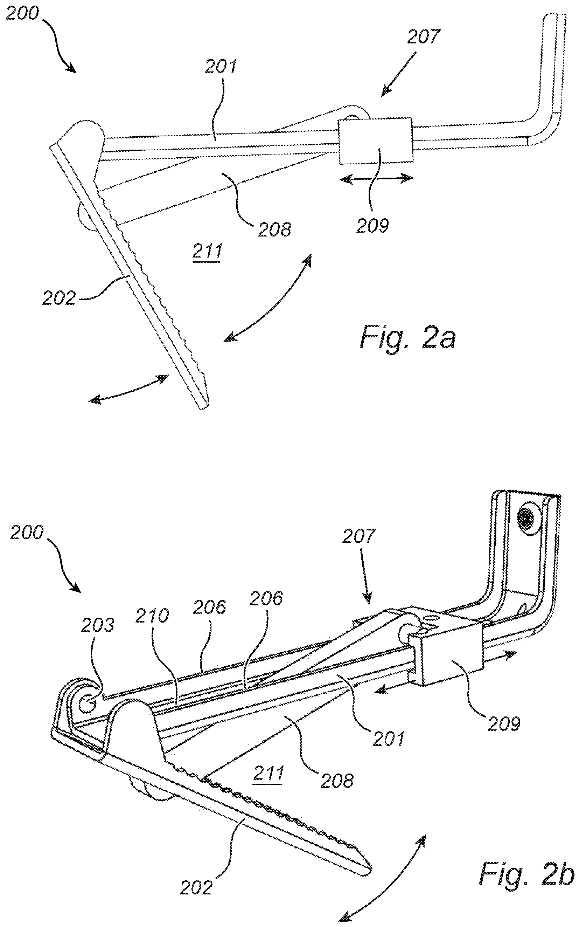

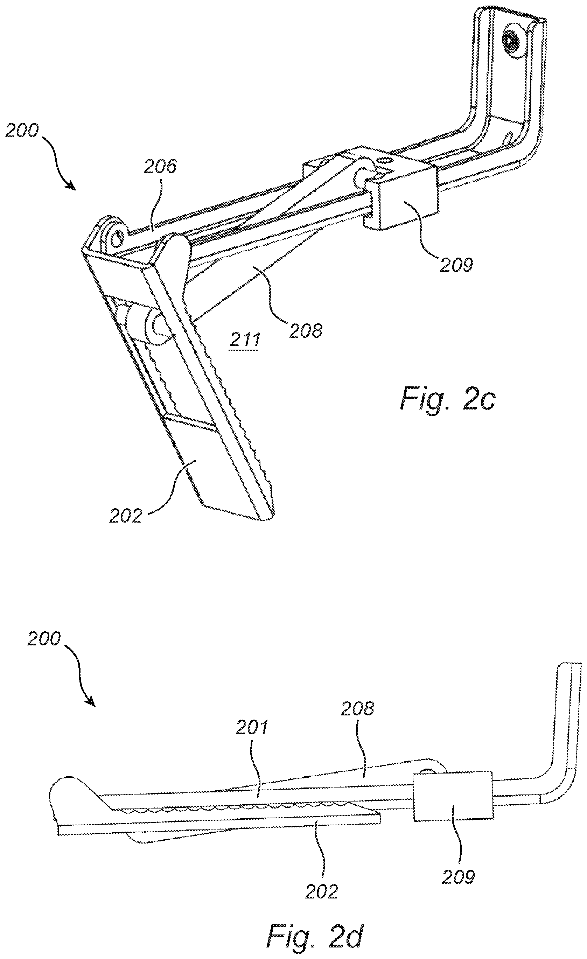

Figures 2a - 2d show a second possible embodiment of a roof hook 200 according to the present invention. Figure 2a shows a side view of the roof hook 200, where figure 2b shows a perspective view both in a possible position of use. Figure 2c shows the roof hook 200 in a further opened position. Figure 2d shows a side view of the roof hook 200 in an initial position. The roof hook 200 of the shown embodiment has a substantially similar configuration as the roof hook 100 shown in figures 1a and 1b. The roof hook 200 also comprises an substantially elongated base element 201 and a hook member 202, which are mutually displaceable. The mutual displacement between the base element 201 and the hook member 202 can be initiated via an actuator 207. In the shown embodiment, the actuator 207 comprises a shaft 208 which is connected to both the hook member 202 and the base element 201. Said connection can be either directly or indirectly. The base element 201 comprises a through hole 210 wherethrough the shaft 208 is passed. The dimensions of the trough hole 210 are preferably adapted to the dimensions of the shaft 208 and the desired displacement of the hook member with respect the base element (or the mutual displacement). The shaft 208 is preferably pivotably connected to an part of the hook member 202 near the connection of the hook member 202 with the base element 201 when the roof hook is in a position of use. In this way, the accommodating space 211 enclosed between the hook member 202 and the base element 201 is not negatively affected. It can be seen that the accommodating space 211 is larger in the embodiment of figure 2c compared to figures 2a and 2b (and 2d). The hook member 202 and base element 201 are connected via a hinge connection 203. The roof hook 200, and in particular the actuator 207 further comprises an operating element 209. The operating element 209 is in the shown embodiment slideable over the outer edges 206, or reinforcement ribs 206, of the base element 201. Hence, displacement of the operating element 209 causes displacement of the hook member 202 with respect to the base element 201. The operating element 209 can be manually operated. In the shown embodiment, the operating element is 209 encloses part of the base element 201. It is, however, also conceivable that the operating element 209 would be substantially enclosed between part of the base element 201. The shaft 208 is pivotably connected to the operating element 209. The arrows indicate possible directions of the displacement of the base element 201 with respect to the hook member 202, or vice versa. In figure 2d, the roof hook 200 is in its initial position. The compact character of the roof hook 200 is shown in this figure. Herein the effective height defined by the longitudinal part of the base element and the hook member is relatively small.

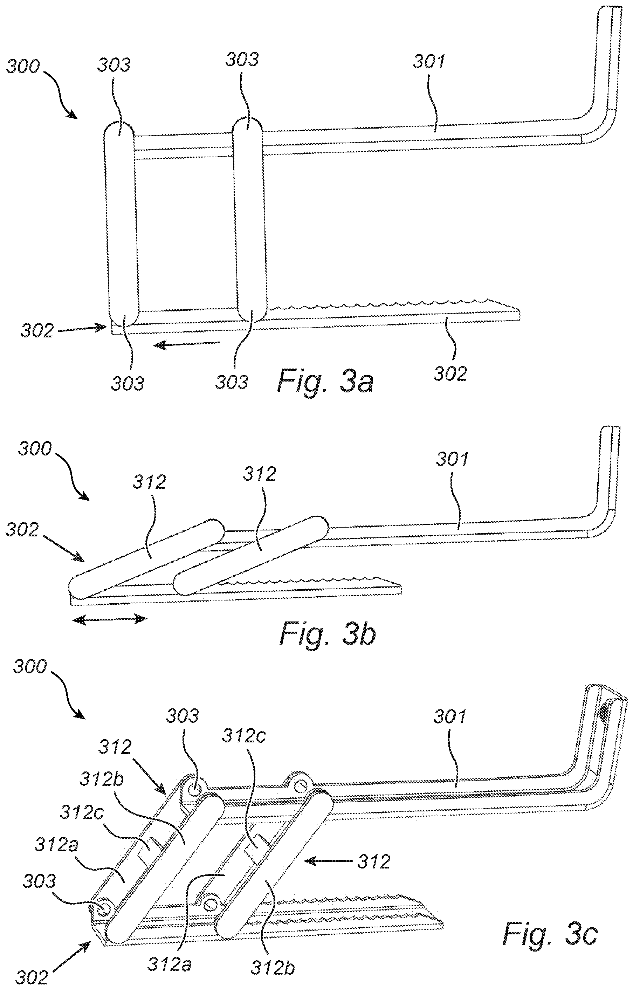

Figures 3a, 3b and 3c show a third possible embodiment of a roof hook 300 according to the present invention. Figures 3a and 3b show a side view of the roof hook 300, where figure 3c shows a perspective view. The shown embodiment of the roof hook 300 comprises a base element 301 and a hook member 302. The hook member 302 is connected to the base element 301 via multiple hinges 303. Said hinges 303 are positioned in series. The roof hook 300, and in particular the hook member 302, comprises two parallel positioned pivotable arms 312 which are connected to via the hinges 303 to respectively the base element 301 and the hook member 302. Basically, the base element 301 and the hook member 302 are mutually connected the two parallel positioned pivotable arms 312. Due to this configuration, part of the hook member 302 can stay substantially parallel to part of the base element 301 during mutual displacement. In the shown embodiment, each arm 312 comprises a bridge-configuration. Each arm 312 comprises two co-acting arm members 312a, 312b which are mutually connected at a central region of the arm via a bridge 312c. Each arm member 312a, 312b is hingeably connected to both the base element 301 and the hook member 302 at a pivot point 303. The parallel displacement of the hook member 302 can be seen in the figures, where figure 3a shows the roof hook 300 in its position of use, figure 3b shows an initial position and figure 3c shows an intermediate position.

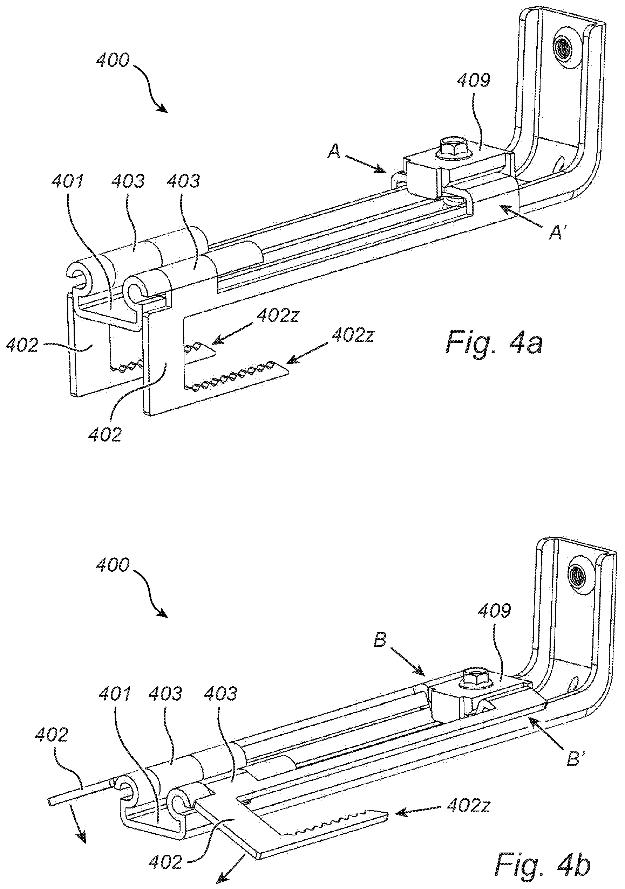

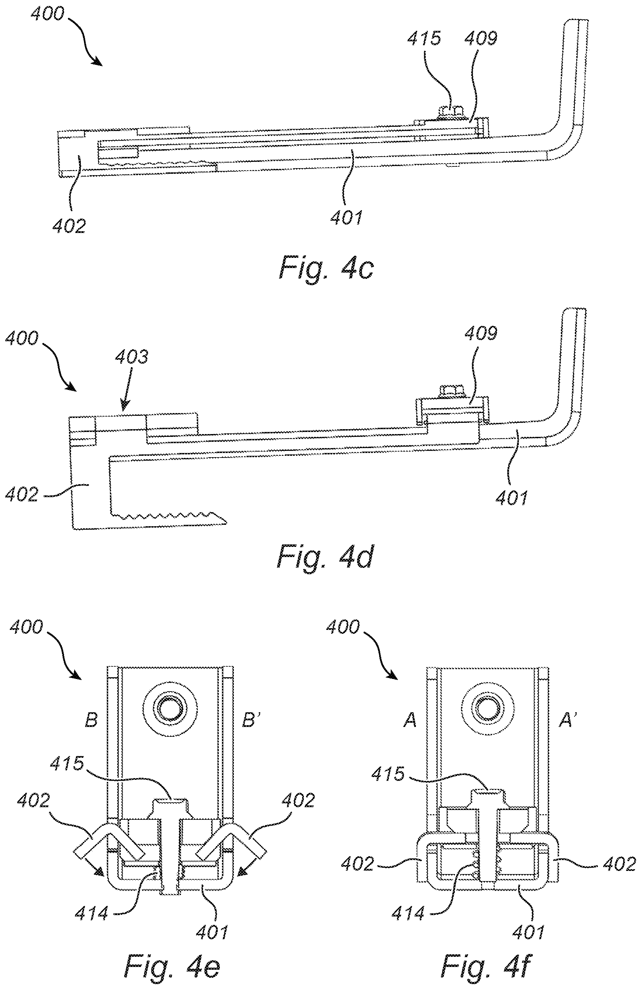

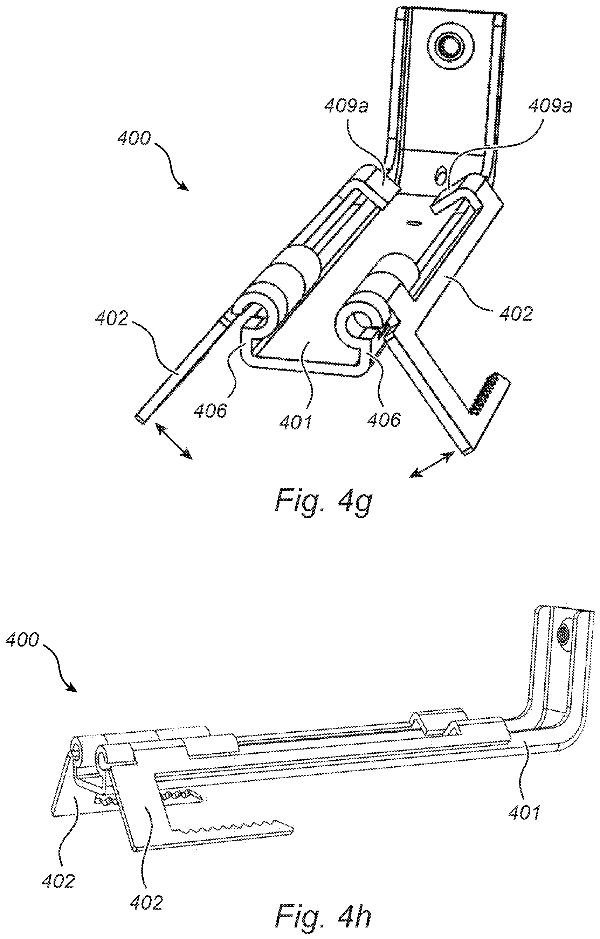

Figures 4a-4f show a fourth possible embodiment of a roof hook 400 according to the present invention. Figures 4a and 4b show a perspective view, figures 4c and 4d a side view and figures 4e and 4f a cross-sectional view. Figures 4a, 4d and 4f show the roof hook 400 in a position of use, wherein the base element 401 and the hook members 402 define a hook structure such that both hook members 402 can be hooked behind a tile batten arranged on a roof. In the shown embodiment, the base element 401 and the hook members 402 are hingeably connected via hinges 403. The hinges 403 are in the shown embodiment partially formed by the base element 401 and the hook members 402. Both the base element 401 and the hook members 402 define at least one knuckle, wherein the knuckles are co-acting via the interposition of a pin (not shown) which acts as axis of rotation. The roof hook 400 further comprises an operating element 409 configured for manual activation of a mutual displacement between the base element 401 and the hook members 402 at least from the initial position (figure 4b) to the position of use (figure 4a). Figures 4e and 4f show that in case the operating element 409 is activated such that the spring 414 is released from the compressed configuration (figure 4e) to the stretched configuration (figure 4f). It is beneficial if the operating element 409 is positioned at a distance from the hook structure which is to be formed, since this facilitates simplified (manual) activation. Hence, the roof hook 400 is preferably provided in the initial position, and placed between tiles of the roof such that there is sufficient space for the hook members 402, and in particular the outer ends 402z thereof to unfold. Subsequently each hook member 402 can be individually displaced with respect to the base element 401. This is a pivotable displacement around an axis which is substantially parallel to the longitudinal direction of the base element 401. Each hook member 402 thereby displaces transversally, or sideways (seen from the base element 401). The hook members 402 may displace in a symmetrical manner. When the roof hook 400 is in the position of use, the hook structure may be hooked behind the tile batten. Due to the use of the spring 414 the roof hook will remain in the position of use. This can also be set by making use of a fixation element 415, such as a screw 415. In the shown embodiment, the displacement of the hook members 402 is restricted into the position of use due to part of the base element 401, in particular an outer edge, forming a (vertical) boundary. It can be seen when comparing figures 4a and 4b that the mutual distance between the hook members 402 can be varied depending on the position.

Figures 4h and 4h show a simplified embodiment of the roof hook 400 as shown in figures 4a-4e. The mutual displacement between the base element 401 and the hook members 402 of the roof hook 400 can be manually initiated in a relatively simple manner. Hereto, the operating elements 409a are configured for manual activation of said mutual displacement form integrally part of the hook members 402. The hook members 402 comprise an elongated part which extend along the elongated part of the base element 401. The support edges 406 of the base element 401 form a boundary for restriction of the mutual displacement between said base element 401 and the hook members 402.

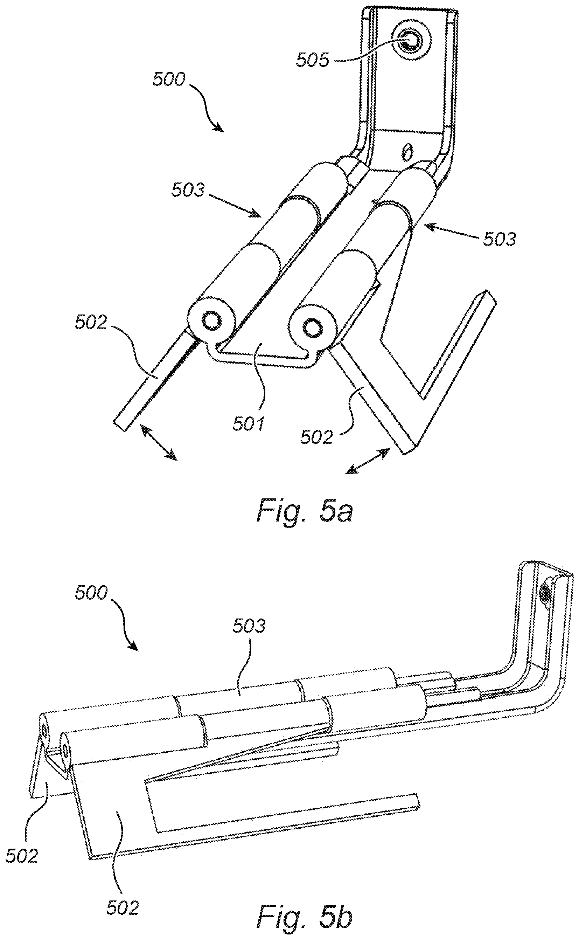

Figures 5a and 5b show a fifth possible embodiment of a roof hook 500 according to the present invention. The roof hook 500 is conceptual seen substantially similar to the configuration shown in figures 4a-4h. Despite not shown, the device 500 may be spring-activated, for example via an operating element as shown in figures 4a-4f. The hinges 503 of the device 500 extend over substantially the full length of the elongated part of the base element 501. Herewith a rather stable displacement between the base element 501 and the hook members 502 can be obtained. The arrows indicate possible directions of the mutual displacement between the base element 501 and hook members 502. The base element 501 comprises a coupling member 505 configured for coupling with at least one further mounting element for mounting a solar panel to a roof.

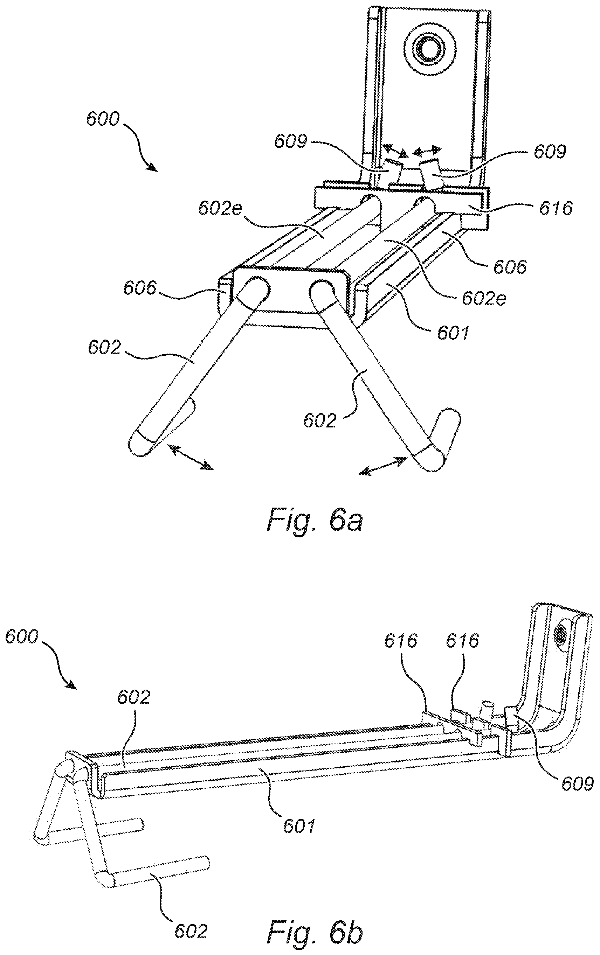

Figures 6a and 6b show a sixth possible embodiment of a roof hook 600 according to the present invention. The roof hook 600 also comprises a substantially elongated base element 601 and two hook members 602 which are configured for co-action with a part of the roof, in particular a tile batten arranged on the roof. Despite the figures only showing one intermediate position, the base element 601 and the hook members 602 are mutually displaceable at least between a position of use and an initial position. In this embodiment, each hook member 602 comprises a rotatable shaft 602e which is rotatable in the longitudinal direction of the base element 601. The base element 601 comprises reinforcement ribs 606 which enclose the rotatable shafts 602e of the hook members 602. Rotation of the shaft 602e causes displacing of the hook member 602 with respect to the base element 601. In the shown embodiment, the ribs 606 create a protective environment for the hook members 602, and in particular the rotatable shafts 602e thereof. Guide elements 616 are present for guiding the hook members 602. The displacement between the hook members 602 and base element 601 can be manually activated via the operating element 609, which form integral part of the hook members 602. The hook members 602 further each define a substantially rectangular hook. If both hook members 602 are positioned in the position of use, the combination of the hook members 602 define a hook structure for which can be hooked behind part of the roof.

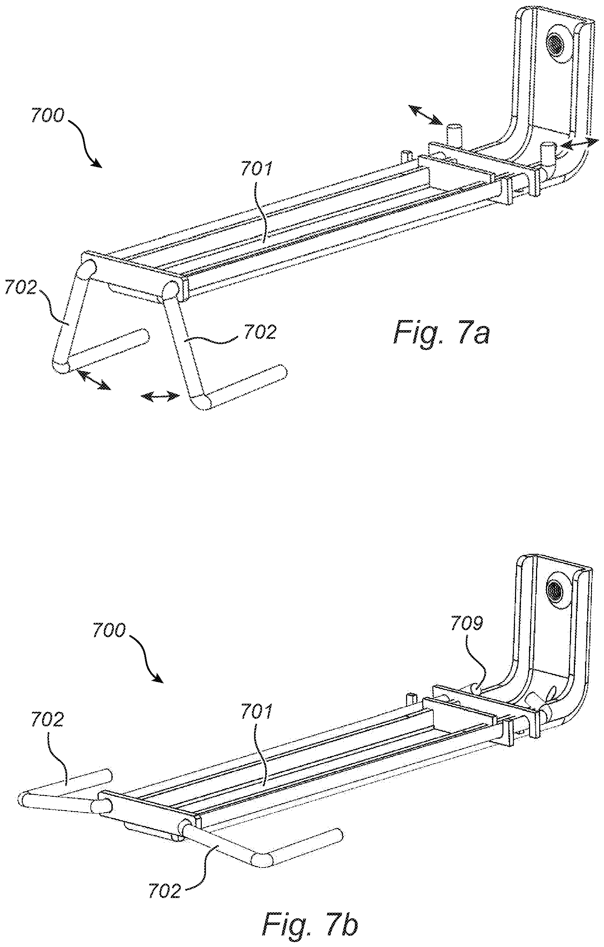

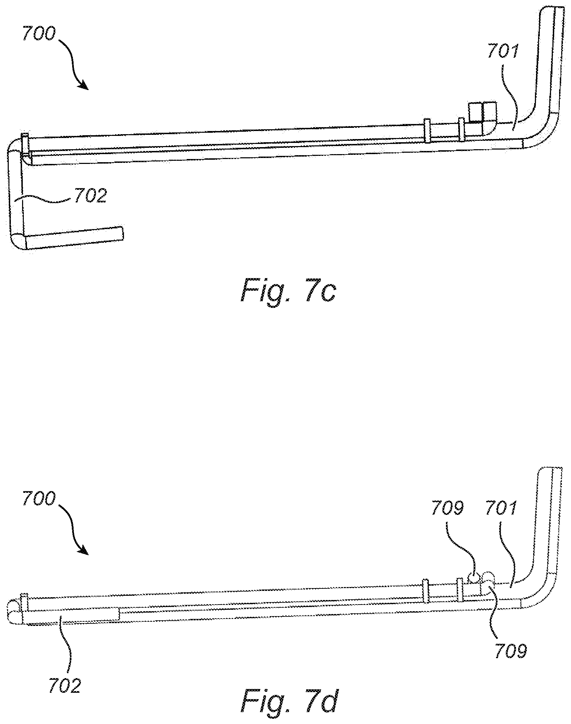

Figures 7a-7d show a seventh possible embodiment of a roof hook 700 according to the present invention. Figures 7a and 7c show the roof hook 700 in a possible position of use, where figures 7b and 7d show a possible initial position. The roof hook 700 is substantially similar to the roof hook 600 shown in figures 6a and 6b. However, in the embodiment of figures 7a-7d, the hook members 702 are positioned along the outer edges of the base element 701. Due to the wider configuration of the roof hook 700, this embodiment may provide a relatively large stability when positioned upon a roof. The hook members 602 are made of (metal) wire.

Figures 8a and 8b show an eighth embodiment of a roof hook 800 according to the present invention. The elongated base element 801 comprises reinforcing ribs 806 which are configured for co-action with the hook member 802. The hook member 802 comprises a rotatable shaft 802e. Part of the hook member 802, and in particular the rotatable shaft 809 is received in a through hole of the reinforcing rib 806 of the base element. In the shown embodiment, the operating element 809 forms integral part of the base element 801. The figures shown an initial position of the roof hook 800. The roof hook 800 can be hooked behind a part of a roof, such as a tile batten. Then the base element 801 can be pivoted such that the hook member 802, present in the form of a wire, can act as a torsion spring, thereby clampingly engaging the roof hook 800 to the roof. In fact, the hook member 802 remains substantially stationary, seen from positional point of view, during mounting onto the roof. Part of the roof is then received within the receiving space 811 defined by the hook member 802. Subsequently, the base element 801 is rotated with respect to the hook member 802, and in particular the rotatable shaft 802e thereof. The rotatable shaft 802e connected to the base element 801 at two connection points 828 spaced apart from another. In the shown embodiment, the connection points 828 are formed in a relatively simple manner; by providing a through hole in part of the base element 801 wherein part of the hook member 802 can be received. The base element 801 can be twisted such that the base element 801 causes the hook member 802 to act as a torsion spring. This may cause an effective fixation of the roof hook 800 to part of the roof.

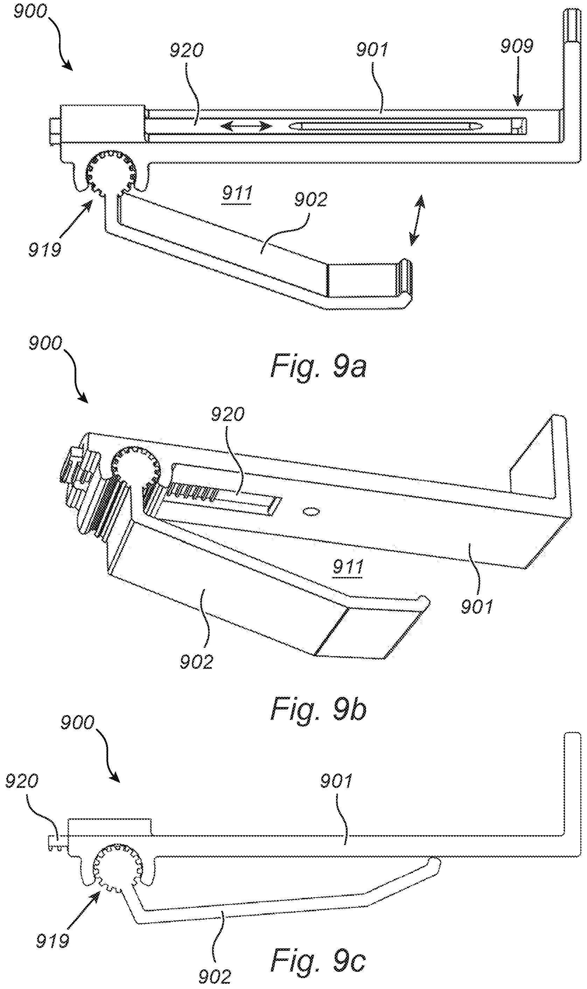

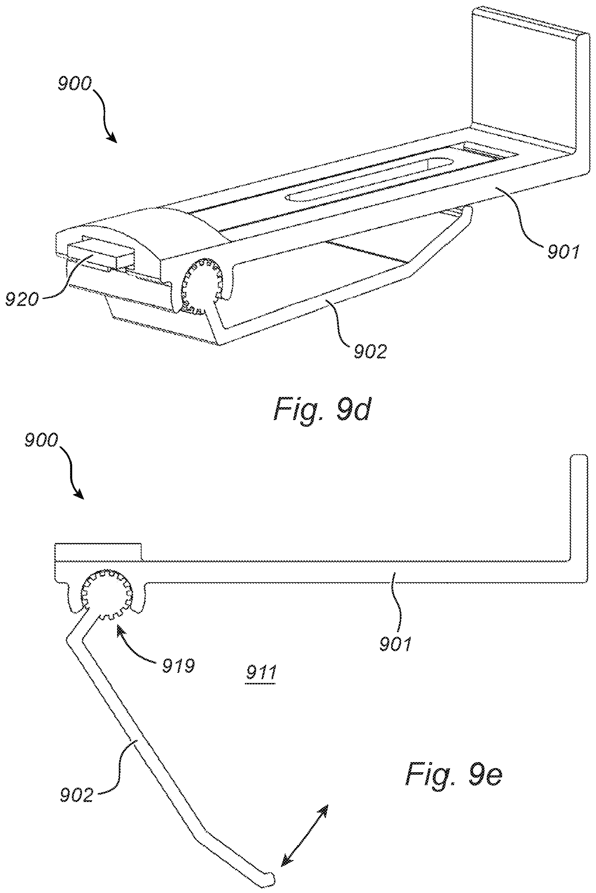

Figures 9a-9e show a ninth possible embodiment of a roof hook 900 according to the present invention. The roof hook 900 comprises a base element 901 and one hook member 902. The hook member 902 has substantially the same width as the base element 901. The pivotable connection between the base element 901 and the hook member 902 is provided via a gear construction. The base element 901 and the hook member 902 are connected via a gear 919, wherein the roof hook 900 further comprises a gear rack 920 configured for initiating mutual displacement between the hook member 901 and the base element 902. Hence, the gear 920 can also be referred to as actuator 920. Part of the hook member 902 thereto comprises a toothed surface. The gear rack 920 is configured for co-action with said toothed surface. The mutual displacement between the base element 901 and the hook member 902 is limited at the point where both engage another, as seen in figures 9c and 9d. This is the initial position. The position of use (figures 9a and 9b) define a smaller accommodating space 911 than which is defined in a position of substantially maximum extension (figure 9e). It is possible that the gear rack 920 comprises an operating element 909. Preferably, the base element 901 and the hook member 902 can be locked in a preferred position, such as the position of use and the initial position. The operating element 909 is in the shown embodiment a sliding member, which can actuate the gear rack 920 and subsequently rotate the gear 919, thereby pivoting the hook member 902 with respect to the base element 901.

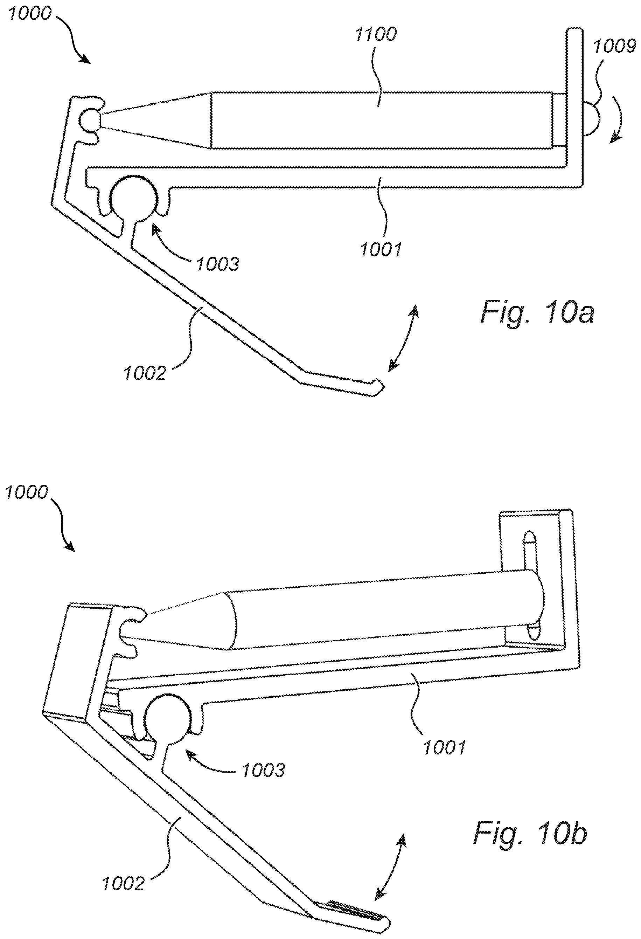

Figures 10a and 10b show a tenth possible embodiment of a roof hook 1000 according to the present invention. The roof hook 1000 has a substantially similar basic configuration as the embodiment shown in figures 9a-9e. The hook member 1002 and the base element 1001 are pivotably connected via a hinge 1003. The pivotable displacement between the base element 1001 and the hook member 1002 can be actuator via actuator 1100. The actuator 1100 can be actuated via an operating element 1009, wherein a user can rotate the operating element 1009 such that the actuator starts rotating too, thereby causing the hook member 1002 to pivot with respect to the base element 1001. Depending on the direction of rotation of the operating element 1009 and/or the actuator 1100, the hook member 1002 will either move towards the base element 1001 or in a direction away from the base element 1001.

It will be apparent that the invention is not limited to the working examples shown and described herein, but that numerous variants are possible within the scope of the attached claims that will be obvious to a person skilled in the art.

Terms of relative position, such as "upper" and "lower", or "vertical" and "horizontal" as used in this patent document are, for clarity reasons only, based on a conventional orientation of the assembly according to the invention when mounted onto a horizontal or diagonal (inclined) roof, regardless of the actual orientation of the assembly.

## Claims

1. Roof hook (400, 500, 600, 700) for fixing solar panels to a roof, comprising:
- a substantially elongated base element (401, 501, 601, 701), and
- at least one hook member (402, 502, 602, 702),
wherein the base element (401, 501, 601, 701) and at least one hook member (402, 502, 602, 702) are mutually connected and configured for co-action with a tile batten arranged on the roof, and
wherein the base element (401, 501, 601, 701) and at least one hook member (402, 502, 602, 702) are mutually displaceable between at least:
∘ a position of use wherein the base element (401, 501, 601, 701) and at least one hook member (402, 502, 602, 702) define a hook structure such that at least one hook member (402, 502, 602, 702) can be hooked behind a tile batten arranged on the roof,
and
∘ an initial position wherein the roof hook (400, 500, 600, 700) is more
compact than in the position of use, **characterized in that** the roof hook (400, 500, 600, 700) comprises at least two hook members (402, 502, 602, 702), wherein each hook member (402, 502, 602, 702) is displaceable with respect to the base element (401, 501, 601, 701) such that the mutual distance between said hook members (402, 502, 602, 702) can be varied.

2. Roof hook (400, 500, 600, 700) according to claim 1, wherein the base element (401, 501, 601, 701) and at least one hook member (402, 502, 602, 702) are mutually pivotable between the initial position and the position of use and/or wherein at least one hook member (402, 502, 602, 702) and the base element (401, 501, 601, 701) are mutually pivotable around an axis which is substantially parallel to the longitudinal direction of the base element (401, 501, 601, 701).

3. Roof hook (400, 500, 600, 700) according to any of the previous claims, wherein at least one hook member (402, 502, 602, 702) and the base element (401, 501, 601, 701) are mutually pivotable around an axis which is substantially perpendicular to the longitudinal direction of the base element (401, 501, 601, 701), preferably wherein the base element (401, 501, 601, 701) and at least one hook member (402, 502, 602, 702) are connected via at least one hinge (403, 503.

4. Roof hook (400, 500, 600, 700) according to any of the previous claims, wherein the mutual position of at least one hook member (402, 502, 602, 702) and the base element (401, 501, 601, 701) can be locked, preferably at least in the position of use and/or in the initial position.

5. Roof hook (400, 500, 600, 700) according to any of the previous claims, wherein at least one hook member (402, 502, 602, 702) comprises a rotatable shaft, preferably wherein the rotatable shaft (602e) is connected to the base element (401, 501, 601, 701) such that twisting of the base element (401, 501, 601, 701) causes the hook member (402, 502, 602, 702) to act as a torsion spring.

6. Roof hook (400, 500, 600, 700) according to any of the previous claims, comprising at least one operating element (409, 609) configured for manual activation of a mutual displacement between the base element (401, 501, 601, 701) and at least one hook member (402, 502, 602, 702), preferably at least from the initial position to the position of use, preferably wherein the operating element (409, 609) is connected to at least one hook member (402, 502, 602, 702) and/or the base element (401, 501, 601, 701).

7. Roof hook (400, 500, 600, 700) according to any of the previous claims, wherein each hook member (402, 502, 602, 702) is at least displaceable, and in particular pivotable, with respect to the base element (401, 501, 601, 701) around an axis which is substantially parallel to the longitudinal direction of the base element (401, 501, 601, 701).

8. Roof hook (400, 500, 600, 700) according to any of the previous claims, wherein the base element (401, 501, 601, 701) and at least one hook member (402, 502, 602, 702) are mutually displaceable in a longitudinal direction.

9. Roof hook (400, 500, 600, 700) according to any of the previous claims, wherein the volume enclosed by at least one hook member (402, 502, 602, 702) and the base element (401, 501, 601, 701) is smaller in the initial position than in the position of the use.

10. Roof hook (400, 500, 600, 700) according to any of the previous claims, comprising at least one actuator for initiating mutual displacement between the base element (401, 501, 601, 701) and at least one hook member (402, 502, 602, 702), preferably wherein the actuator is connected to the base element (401, 501, 601, 701) and at least one hook member (402, 502, 602, 702).

11. Roof hook (400, 500, 600, 700) according to any of the previous claims, wherein the base element (401, 501, 601, 701) and at least one hook member (402, 502, 602, 702) are connected via a gear, wherein the roof hook (400, 500, 600, 700) further comprises a gear rack configured for initiating mutual displacement between the hook member (402, 502, 602, 702) and the base element (401, 501, 601, 701).

12. Roof hook (400, 500, 600, 700) according to any of the previous claims, wherein the base element (401, 501, 601, 701) and at least one hook member (402, 502, 602, 702) are mutually connected via at least two parallel positioned pivotable arms, such that at least part of the hook member (402, 502, 602, 702) stays substantially parallel to at least part of the base element (401, 501, 601, 701) during mutual displacement.

13. Roof hook (400, 500, 600, 700) according to any of the previous claims, wherein the base element (401, 501, 601, 701) comprises at least one coupling member (505) configured for coupling with at least one further mounting element for mounting a solar panel to a roof
and/or wherein at least part of the base element (401, 501, 601, 701) is configured to enclose at least part of at least one hook member (402, 502, 602, 702).

14. Roof hook (400, 500, 600, 700) according to any of the previous claims, wherein a part of the base element (401, 501, 601, 701) defines a boundary configured to restrict the mutual displacement between the base element (401, 501, 601, 701) and at least one hook member (402, 502, 602, 702) and/or comprising at least one visual indicator for indicating the state of the mutual position between the base element (401, 501, 601, 701) and at least one hook member (402, 502, 602, 702).

15. Method for applying a roof hook (400, 500, 600, 700) according to any of the previous claims to a roof, comprising the steps of:
a) providing a roof hook (400, 500, 600, 700) according to any of the previous claims wherein the base element (401, 501, 601, 701) and at least one hook member (402, 502, 602, 702) are in the initial position;
b) displacing a secondary tile of the roof which is positioned above a part of the roof configured for co-acting with the roof hook (400, 500, 600, 700), such that a receiving space for receiving at least part of the roof hook (400, 500, 600, 700) is created;
c) positioning at least part of the roof hook (400, 500, 600, 700) into the receiving space;
d) bringing the base element (401, 501, 601, 701) and at least one hook member (402, 502, 602, 702) into the position of use such that the base element (401, 501, 601, 701) and at least one hook member (402, 502, 602, 702) define a hook structure;
e) hooking at least one hook member (402, 502, 602, 702) behind part of the roof, in particular the tile batten arranged on the roof; and
f) putting the secondary tile back in its initial position; and
g) optional locking of the base element (401, 501, 601, 701) and at least one hook member (402, 502, 602, 702) into the position of use.

## Patentansprüche

1. Dachhaken (400, 500, 600, 700) zum Befestigen von Solarmodulen auf einem Dach, umfassend:
- ein im Wesentlichen längliches Basiselement (401, 501, 601, 701) und
- mindestens ein Hakenelement (402, 502, 602, 702),
wobei das Basiselement (401, 501, 601, 701) und mindestens ein Hakenelement (402, 502, 602, 702) miteinander verbunden und dazu konfiguriert sind, mit einer auf dem Dach angeordneten Dachlatte zusammenzuwirken, und
wobei das Basiselement (401, 501, 601, 701) und mindestens ein Hakenelement (402, 502, 602, 702) gegeneinander verschiebbar sind zwischen mindestens:
∘ einer Gebrauchsposition, wobei das Basiselement (401, 501, 601, 701) und mindestens ein Hakenelement (402, 502, 602, 702) eine Hakenstruktur definieren, sodass mindestens ein Hakenelement (402, 502, 602, 702) hinter einer auf dem Dach angeordneten Dachlatte eingehakt werden kann, und
∘ einer Ausgangsposition, wobei der Dachhaken (400, 500, 600, 700)
kompakter ist als in der Gebrauchsposition, **dadurch gekennzeichnet, dass** der Dachhaken (400, 500, 600, 700) mindestens zwei Hakenelemente (402, 502, 602, 702) umfasst, wobei jedes Hakenelement (402, 502, 602, 702) verschiebbar in Bezug auf das Basiselement (401, 501, 601, 701) ist, sodass der gegenseitige Abstand zwischen den Hakenelementen (402, 502, 602, 702) variiert werden kann.

2. Dachhaken (400, 500, 600, 700) nach Anspruch 1, wobei das Basiselement (401, 501, 601, 701) und mindestens ein Hakenelement (402, 502, 602, 702) zwischen der Ausgangsposition und der Gebrauchsposition gegenseitig schwenkbar sind und/oder wobei mindestens ein Hakenelement (402, 502, 602, 702) und das Basiselement (401, 501, 601, 701) gegenseitig um eine Achse schwenkbar sind, die im Wesentlichen parallel zu der Längsrichtung des Basiselements (401, 501, 601, 701) ist.

3. Dachhaken (400, 500, 600, 700) nach einem der vorstehenden Ansprüche, wobei mindestens ein Hakenelement (402, 502, 602, 702) und das Basiselement (401, 501, 601, 701) gegenseitig um eine Achse schwenkbar sind, die im Wesentlichen senkrecht zu der Längsrichtung des Basiselements (401, 501, 601, 701) ist, bevorzugt wobei das Basiselement (401, 501, 601, 701) und mindestens ein Hakenelement (402, 502, 602, 702) über mindestens ein Scharnier (403, 503) verbunden sind.

4. Dachhaken (400, 500, 600, 700) nach einem der vorstehenden Ansprüche, wobei die gegenseitige Position von mindestens einem Hakenelement (402, 502, 602, 702) und dem Basiselement (401, 501, 601, 701) verriegelt werden kann, bevorzugt mindestens in der Gebrauchsposition und/oder in der Ausgangsposition.

5. Dachhaken (400, 500, 600, 700) nach einem der vorstehenden Ansprüche, wobei mindestens ein Hakenelement (402, 502, 602, 702) einen drehbaren Schaft umfasst, wobei bevorzugt der drehbare Schaft (602e) mit dem Basiselement (401, 501, 601, 701) verbunden ist, sodass ein Verdrehen des Basiselements (401, 501, 601, 701) bewirkt, dass das Hakenelement (402, 502, 602, 702) als Torsionsfeder wirkt.

6. Dachhaken (400, 500, 600, 700) nach einem der vorstehenden Ansprüche, umfassend mindestens ein Betätigungselement (409, 609), das zur manuellen Aktivierung einer gegenseitigen Verschiebung zwischen dem Basiselement (401, 501, 601, 701) und mindestens einem Hakenelement (402, 502, 602, 702), vorzugsweise zumindest von der Ausgangsposition in die Gebrauchsposition, konfiguriert ist, bevorzugt, wobei das Betätigungselement (409, 609) mit mindestens einem Hakenelement (402, 502, 602, 702) und/oder dem Basiselement (401, 501, 601, 701) verbunden ist.

7. Dachhaken (400, 500, 600, 700) nach einem der vorstehenden Ansprüche, wobei jedes Hakenelement (402, 502, 602, 702) zumindest verschiebbar und insbesondere schwenkbar in Bezug auf das Basiselement (401, 501, 601, 701) um eine Achse ist, die im Wesentlichen parallel zu der Längsrichtung des Basiselements (401, 501, 601, 701) ist.

8. Dachhaken (400, 500, 600, 700) nach einem der vorstehenden Ansprüche, wobei das Basiselement (401, 501, 601, 701) und mindestens ein Hakenelement (402, 502, 602, 702) in einer Längsrichtung gegeneinander verschiebbar sind.

9. Dachhaken (400, 500, 600, 700) nach einem der vorstehenden Ansprüche, wobei das von mindestens einem Hakenelement (402, 502, 602, 702) und dem Basiselement (401, 501, 601, 701) eingeschlossene Volumen in der Ausgangsposition kleiner ist als in der Gebrauchsposition.

10. Dachhaken (400, 500, 600, 700) nach einem der vorstehenden Ansprüche, umfassend mindestens einen Aktor zum Einleiten einer gegenseitigen Verschiebung zwischen dem Basiselement (401, 501, 601, 701) und mindestens einem Hakenelement (402, 502, 602, 702), wobei der Aktor bevorzugt mit dem Basiselement (401, 501, 601, 701) und mindestens einem Hakenelement (402, 502, 602, 702) verbunden ist.

11. Dachhaken (400, 500, 600, 700) nach einem der vorstehenden Ansprüche, wobei das Basiselement (401, 501, 601, 701) und mindestens ein Hakenelement (402, 502, 602, 702) über ein Getriebe verbunden sind, wobei der Dachhaken (400, 500, 600, 700) ferner eine Zahnstange umfasst, die dazu konfiguriert ist, eine gegenseitige Verschiebung zwischen dem Hakenelement (402, 502, 602, 702) und dem Basiselement (401, 501, 601, 701) einzuleiten.

12. Dachhaken (400, 500, 600, 700) nach einem der vorstehenden Ansprüche, wobei das Basiselement (401, 501, 601, 701) und mindestens ein Hakenelement (402, 502, 602, 702) über mindestens zwei parallel angeordnete schwenkbare Arme miteinander verbunden sind, sodass mindestens ein Teil des Hakenelements (402, 502, 602, 702) während einer gegenseitigen Verschiebung im Wesentlichen parallel zu mindestens einem Teil des Basiselements (401, 501, 601, 701) bleibt.

13. Dachhaken (400, 500, 600, 700) nach einem der vorstehenden Ansprüche, wobei das Basiselement (401, 501, 601, 701) mindestens ein Kopplungselement (505) umfasst, das zum Koppeln mit mindestens einem weiteren Montageelement zum Montieren eines Solarmoduls auf einem Dach konfiguriert ist
und/oder wobei zumindest ein Teil des Basiselements (401, 501, 601, 701) dazu konfiguriert ist, mindestens einen Teil von mindestens einem Hakenelement (402, 502, 602, 702) zu umschließen.

14. Dachhaken (400, 500, 600, 700) nach einem der vorstehenden Ansprüche, wobei ein Teil des Basiselements (401, 501, 601, 701) eine Grenze definiert, die dazu konfiguriert ist, die gegenseitige Verschiebung zwischen dem Basiselement (401, 501, 601, 701) und mindestens einem Hakenelement (40 2, 502, 602, 702) zu begrenzen und/oder umfassend mindestens eine visuelle Anzeige zum Anzeigen des Zustands der gegenseitigen Position zwischen dem Basiselement (401, 501, 601, 701) und mindestens einem Hakenelement (402, 502, 602, 702).

15. Verfahren zum Anbringen eines Dachhakens (400, 500, 600, 700) nach einem der vorstehenden Ansprüche an einem Dach, umfassend die folgenden Schritte:
a) Bereitstellen eines Dachhakens (400, 500, 600, 700) nach einem der vorstehenden Ansprüche, wobei sich das Basiselement (401, 501, 601, 701) und mindestens ein Hakenelement (402, 502, 602, 702) in der Ausgangsposition befinden;
b) Verschieben einer über einem Teil des Daches angeordneten sekundären Dachplatte, die dazu konfiguriert ist, mit dem Dachhaken (400, 500, 600, 700) zusammenzuwirken, sodass ein Aufnahmeraum zum Aufnehmen von mindestens einem Teil des Dachhakens (400, 500, 600, 700) geschaffen wird;
c) Positionieren mindestens eines Teils des Dachhakens (400, 500, 600, 700) in dem Aufnahmeraum;
d) Bringen des Basiselements (401, 501, 601, 701) und mindestens eines Hakenelements (402, 502, 602, 702) in die Gebrauchsposition, sodass das Basiselement (401, 501, 601, 701) und mindestens ein Hakenelement (402, 502, 602, 702) eine Hakenstruktur definieren;
e) Einhaken mindestens eines Hakenelements (402, 502, 602, 702) hinter einem Teil des Daches, insbesondere der auf dem Dach angeordneten Dachlatte; und
f) Zurückbringen der sekundären Platte in ihre Ausgangsposition; und
g) optional Verriegeln des Basiselements (401, 501, 601, 701) und mindestens eines Hakenelements (402, 502, 602, 702) in der Gebrauchsposition.

## Revendications

1. **Crochet** de toit (400, 500, 600, 700) pour fixer des panneaux solaires à un toit, comprenant :
- un élément de base sensiblement allongé (401, 501, 601, 701), et
- au moins une extrémité de crochet (402, 502, 602, 702),
dans lequel l'élément de base (401, 501, 601, 701) et au moins un élément de crochet (402, 502, 602, 702) sont mutuellement reliés et configurés pour coopérer avec une latte de tuile disposée sur le toit, et
dans lequel l'élément de base (401, 501, 601, 701) et au moins un élément de crochet (402, 502, 602, 702) sont mutuellement déplaçables entre au moins :
∘ une position d'utilisation dans laquelle l'élément de base (401, 501, 601, 701) et au moins un élément de crochet (402, 502, 602, 702) définissent une structure de crochet telle qu'au moins un élément de crochet (402, 502, 602, 702) peut être accroché derrière une latte de tuile disposée sur le toit, et
∘ une position initiale dans laquelle le crochet de toit (400, 500, 600, 700) est
plus compact qu'en position d'utilisation, **caractérisé en ce que** le crochet de toit (400, 500, 600, 700) comprend au moins deux éléments de crochet (402, 502, 602, 702), chaque élément de crochet (402, 502, 602, 702) pouvant être déplacé par rapport à l'élément de base (401, 501, 601, 701) de sorte que la distance mutuelle entre lesdits éléments de crochet (402, 502, 602, 702) puisse être modifiée.

2. Crochet de toit (400, 500, 600, 700) selon la revendication 1, dans lequel l'élément de base (401, 501, 601, 701) et au moins un élément de crochet (402, 502, 602, 702) peuvent pivoter mutuellement entre la position initiale et la position d'utilisation et/ou dans lequel au moins un élément de crochet (402, 502, 602, 702) et l'élément de base (401, 501, 601, 701) peuvent pivoter mutuellement autour d'un axe qui est sensiblement parallèle à la direction longitudinale de l'élément de base (401, 501, 601, 701).

3. Crochet de toit (400, 500, 600, 700) selon l'une quelconque des revendications précédentes, dans lequel au moins un élément de crochet (402, 502, 602, 702) et l'élément de base (401, 501, 601, 701) peuvent pivoter mutuellement autour d'un axe qui est sensiblement perpendiculaire à la direction longitudinale de l'élément de base (401, 501, 601, 701), de préférence dans lequel l'élément de base (401, 501, 601, 701) et au moins un élément de crochet (402, 502, 602, 702) sont reliés par l'intermédiaire d'au moins une charnière (403, 503).

4. Crochet de toit (400, 500, 600, 700) selon l'une quelconque des revendications précédentes, dans lequel la position mutuelle d'au moins un élément de crochet (402, 502, 602, 702) et de l'élément de base (401, 501, 601, 701) peut être verrouillée, de préférence au moins dans la position d'utilisation et/ou dans la position initiale.

5. Crochet de toit (400, 500, 600, 700) selon l'une quelconque des revendications précédentes, dans lequel au moins un élément de crochet (402, 502, 602, 702) comprend un arbre rotatif, de préférence dans lequel l'arbre rotatif (602e) est relié à l'élément de base (401, 501, 601, 701) de sorte que la torsion de l'élément de base (401, 501, 601, 701) amène l'élément de crochet (402, 502, 602, 702) à agir comme un ressort de torsion.

6. Crochet de toit (400, 500, 600, 700) selon l'une quelconque des revendications précédentes, comprenant au moins un élément d'actionnement (409, 609) configuré pour l'activation manuelle d'un déplacement mutuel entre l'élément de base (401, 501, 601, 701) et au moins un élément de crochet (402, 502, 602, 702), de préférence au moins de la position initiale à la position d'utilisation, de préférence dans lequel l'élément d'actionnement (409, 609) est relié à au moins un élément de crochet (402, 502, 602, 702) et/ou à l'élément de base (401, 501, 601, 701).

7. Crochet de toit (400, 500, 600, 700) selon l'une quelconque des revendications précédentes, dans lequel chaque élément de crochet (402, 502, 602, 702) est au moins déplaçable, et en particulier pivotant, par rapport à l'élément de base (401, 501, 601, 701) autour d'un axe qui est sensiblement parallèle à la direction longitudinale de l'élément de base (401, 501, 601, 701).

8. Crochet de toit (400, 500, 600, 700) selon l'une quelconque des revendications précédentes, dans lequel l'élément de base (401, 501, 601, 701) et au moins un élément de crochet (402, 502, 602, 702) sont mutuellement déplaçables dans une direction longitudinale.

9. Crochet de toit (400, 500, 600, 700) selon l'une quelconque des revendications précédentes, dans lequel le volume enfermé par au moins un élément de crochet (402, 502, 602, 702) et l'élément de base (401, 501, 601, 701) est plus petit dans la position initiale que dans la position d'utilisation.

10. Crochet de toit (400, 500, 600, 700) selon l'une quelconque des revendications précédentes, comprenant au moins un actionneur pour initier un déplacement mutuel entre l'élément de base (401, 501, 601, 701) et au moins un élément de crochet (402, 502, 602, 702), de préférence dans lequel l'actionneur est relié à l'élément de base (401, 501, 601, 701) et au moins un élément de crochet (402, 502, 602, 702).

11. Crochet de toit (400, 500, 600, 700) selon l'une quelconque des revendications précédentes, dans lequel l'élément de base (401, 501, 601, 701) et au moins un élément de crochet (402, 502, 602, 702) sont reliés par l'intermédiaire d'un engrenage, dans lequel le crochet de toit (400, 500, 600, 700) comprend en outre une crémaillère configurée pour initier un déplacement mutuel entre l'élément de crochet (402, 502, 602, 702) et l'élément de base (401, 501, 601, 701).

12. Crochet de toit (400, 500, 600, 700) selon l'une quelconque des revendications précédentes, dans lequel l'élément de base (401, 501, 601, 701) et au moins un élément de crochet (402, 502, 602, 702) sont mutuellement reliés par l'intermédiaire d'au moins deux bras pivotants positionnés en parallèle, de sorte qu'au moins une partie de l'élément de crochet (402, 502, 602, 702) reste sensiblement parallèle à au moins une partie de l'élément de base (401, 501, 601, 701) pendant le déplacement mutuel.

13. Crochet de toit (400, 500, 600, 700) selon l'une quelconque des revendications précédentes, dans lequel l'élément de base (401, 501, 601, 701) comprend au moins un élément d'accouplement (505) configuré pour s'accoupler avec au moins un autre élément de montage pour monter un panneau solaire sur un toit
et/ou dans lequel au moins une partie de l'élément de base (401, 501, 601, 701) est configurée pour entourer au moins une partie d'au moins un élément de crochet (402, 502, 602, 702).

14. Crochet de toit (400, 500, 600, 700) selon l'une quelconque des revendications précédentes, dans lequel une partie de l'élément de base (401, 501, 601, 701) définit une limite configurée pour limiter le déplacement mutuel entre l'élément de base (401, 501, 601, 701) et au moins un élément de crochet (402, 502, 602, 702) et/ou comprenant au moins un indicateur visuel pour indiquer l'état de la position mutuelle entre l'élément de base (401, 501, 601, 701) et au moins un élément de crochet (402, 502, 602, 702).

15. Procédé pour appliquer un crochet de toit (400, 500, 600, 700) selon l'une quelconque des revendications précédentes à un toit, comprenant les étapes consistant à :
a) fournir un crochet de toit (400, 500, 600, 700) selon l'une quelconque des revendications précédentes, dans lequel l'élément de base (401, 501, 601, 701) et au moins un élément de crochet (402, 502, 602, 702) sont dans la position initiale ;
b) déplacer une tuile secondaire du toit qui est positionnée au-dessus d'une partie du toit configurée pour coopérer avec le crochet de toit (400, 500, 600, 700), de sorte qu'un espace de réception pour recevoir au moins une partie du crochet de toit (400, 500, 600, 700) est créé ;
c) positionner au moins une partie du crochet de toit (400, 500, 600, 700) dans l'espace de réception ;
d) amener l'élément de base (401, 501, 601, 701) et au moins un élément de crochet (402, 502, 602, 702) dans la position d'utilisation de sorte que l'élément de base (401, 501, 601, 701) et au moins un élément de crochet (402, 502, 602, 702) définissent une structure de crochet ;
e) accrocher au moins un élément de crochet (402, 502, 602, 702) derrière une partie du toit, en particulier la latte de tuile disposée sur le toit ; et
f) remettre la tuile secondaire dans sa position initiale ; et
g) verrouiller facultativement l'élément de base (401, 501, 601, 701) et au moins un élément de crochet (402, 502, 602, 702) dans la position d'utilisation.
